# EUROPEAN PATENT APPLICATION

(11) **EP 0 639 828 A1**
(43) Date of publication of application: **22.02.1995**
(21) Application number: 94112533.8
(22) Date of filing: 10.08.1994
(51) Int. Cl.: G11B 5/86, G11B 23/113, G11B 27/32

(54) **Magnetic information recording/reproducing apparatus and magnetic medium for use therewith**

(30) Priority: 16.08.1993 JP 202321/93
(71) Applicant: Sony Magnescale, Inc., Shinagawa-ku, Tokyo 141 (JP)
(72) Inventor: Takao, Yoshiki, Chigasaki City, Kanagawa Pref (JP); Oshima, Masashi, Machida-city, Tokyo (JP)
(74) Representative: Grünecker, Kinkeldey, Stockmair & Schwanhäusser Anwaltssozietät

(57) **Abstract**

A duplicator for dubbing magnetic information along with a periodical synchronizing signal produced at uniform intervals from a mother tape to a slave tape. A coded signal is recorded on the slave tape in synchronism with the periodical synchronizing signal. A loading apparatus for loading a slave tape into a cassette. The slave tape has a magnetic information recorded thereon along with a periodical synchronizing signal produced at uniform intervals. The loading apparatus reproduce a coded signal recorded on the slave signal in synchronism with the periodical synchronizing signal. The magnetic information recording and reproducing apparatus may use a magnetic medium having the periodical synchronizing signal and the coded signal recorded thereon.

## Description

### BACKGROUND OF THE INVENTION

This invention relates to a magnetic information recording/reproducing apparatus and a magnetic medium for use therewith.

Magnetic information recording apparatus have been used for high-speed dubbing of video and/or audio signals from a mother tape to a slave tape placed in a tape-on-tape contact with the mother tape. Magnetic information reproducing apparatus have been used for automatically loading of a slave tape having video and/or audio signals dubbed thereto into a cassette. For such magnetic information and reproducing apparatus, it is the current practice to record a code on slave and/or mother tapes for quality management and production management.

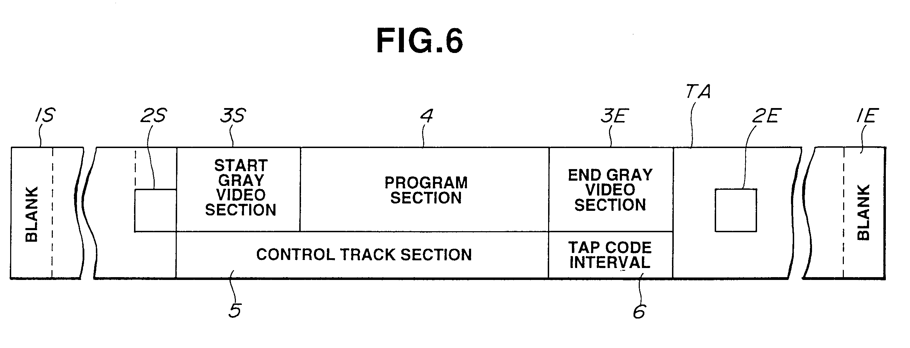

Fig. 6 shows a typical format of a tape code recorded on a mother or slave tape TA. The tape TA has front and rear blank sections 1S and 1E respectively at its front and rear ends. The tape TA also has a start cue section 2S in rear of the front blank section 1S substantially intermediate between the opposite sides of the tape TA and an end cue section 2E in front of the rear blank section 1E substantially intermediate between the opposite sides of the tape TA. The start cue section 2S has a start cue signal recorded thereon and the end cue section 2E has an end cue signal recorded thereon. The tape TA has a start gray video section 3S in rear of the start cue section 2S and a program section 4 in rear of the start gray video section 3S. The program section 4 has a program software video signal recorded thereon. A control track section (CTL) 5 is provided below the start gray video and program sections 3S and 4. The tape TA has an end gray video section 3E in rear of the program section 4 and in front of the end cue section 2E. A code interval 6 is provided below the end gray video section 3E.

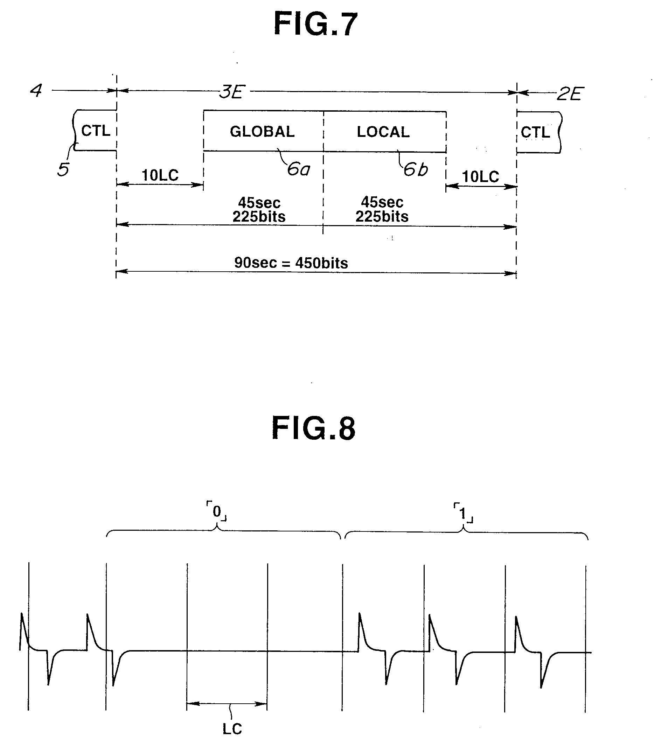

As shown in Fig. 7, the code interval 6 comprises 450 bits (corresponding to 90 seconds). The front half comprised of 225 bits includes a 10 length cell (10LC) and a global section 6a in rear of the 10 length cell. The global section 6a is used for storing information related to the items such as a system identification, a catalogue number, a country number, a mother tape identification, a mother tape length, a title format (for example, NTSC) or the like to be managed. The rear half comprised of 225 bits includes a local section 6b and a 10 LC provided in rear of the local section. The local section 6b is used for storing items such as a tape stock, a copy data, a copy time, a transfer number, a tape type, a sequence number, etc. These items included in the code are utilized in the magnetic information recording and reproducing apparatus in managing the quality of the video cartridge or the pancake loaded in the cartridge.

Fig. 8 shows a control track (CTL) signal for the code used during loading operation. The control track signal has a logical level "0" for the first to third length cells 1LC to 3LC and a logical level "1" for the fourth to eighth length cells 4CL to 8CL. The gray video section 3E includes 12 CTLs in the NTSC system and 14 CTLs in the PAL system. With such asynchronous signal processing systems, a tape speed change will cause a code detection error during a dubbing or loading operation. In addition, a tape transportation servo error occurs to have an undesired effect on the program reproduction during a reproducing operation since the control track (CTL) signal is modulated in the gray video section 3E. Furthermore, such a tape transportation servo error cannot be detected since no error correcting function is provided.

### SUMMARY OF THE INVENTION

A main object of the invention is to provide an improved magnetic information recording apparatus which can record magnetic information on a slave tape for use in managing the slave tape regardless of changes in the speed of transportation of the slave tape without any undesired effect on the program recorded on the slave tape.

It is another object of the invention to provide an improved magnetic information reproducing apparatus which can reproduce the magnetic information recorded on a slave tape for use in managing the slave tape regardless of changes in the speed of transportation of the slave tape without any undesired effect on the program recorded on the slave tape.

It is still another object of the invention to provide a recording medium for use with such information recording and/or reproducing apparatus.

There is provided, in accordance with the invention, a magnetic information recording apparatus for dubbing magnetic information along with a periodical synchronizing signal produced at uniform intervals from a mother tape to a slave tape. The magnetic information recording apparatus comprises a detecting head provided in a path of transportation of the slave tape for detecting the periodical synchronizing signal, and a recording head provided in the path of transportation of the slave tape. The magnetic information recording apparatus also includes a control unit responsive to the periodical synchronizing signal fed thereto from the detecting head for operating the recording head to record a coded signal on the slave tape in synchronism with the periodical synchronizing signal.

In another aspect of the invention, there is provided a magnetic information reproducing apparatus for loading a slave tape into a cassette. The slave tape has magnetic information dubbed along with a periodical synchronizing signal produced at uniform intervals from a mother tape. The magnetic information reproducing apparatus comprises a detecting head provided in a path of transportation of the slave tape for detecting the periodical synchronizing signal, and a reproducing head provided in the path of transportation of the slave tape for reproducing the periodical synchronizing signal. The magnetic information reproducing apparatus also includes a control unit responsive to the periodical synchronizing signal fed thereto from the detecting head for operating the reproducing head to reproduce a code signal recorded on the slave tape in synchronism with the periodical synchronizing signal.

In another aspect of the invention, there is provided a magnetic medium having a periodical synchronizing signal and a coded signal recorded thereon. The periodical synchronizing signal is produced at uniform intervals. The coded signal is recorded in synchronism with the periodical synchronizing signal.

### BRIEF DESCRIPTION OF THE DRAWINGS

This invention will be described in greater detail by reference to the following description taken in connection with the accompanying drawings, in which:
Fig. 1 is a schematic diagram showing one embodiment of a magnetic information recording apparatus made in accordance with the invention:
Fig. 2 is a diagram showing a start cue signal recorded on a mother tape for use with the magnetic information recording apparatus of Fig. 1;
Fig. 3 is a diagram showing one example of coded signal recorded on a mother tape for use with the magnetic information recording apparatus of Fig. 1;
Fig. 4 is a schematic diagram showing one embodiment of a magnetic information reproducing apparatus made in accordance with the invention;
Fig. 5 is a diagram showing magnetic information recorded on a slave tape for use with the magnetic information reproducing apparatus of Fig. 4;
Fig. 6 is a diagram showing one example of code;
Fig. 7 is a diagram showing the detailed arrangement of the code of Fig. 6; and
Fig. 8 is a diagram used in explaining one example of a code coding fashion.

### DETAILED DESCRIPTION OF THE INVENTION

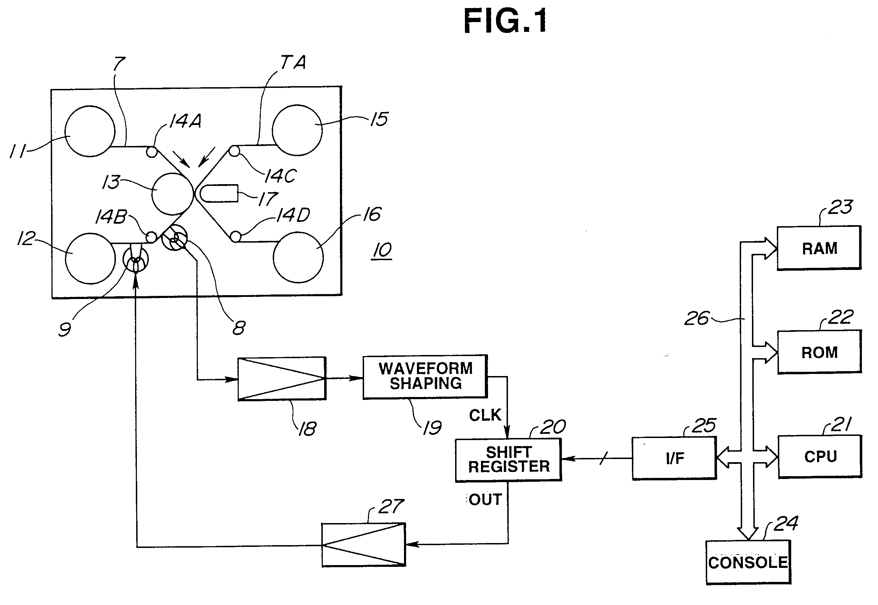

With reference to the drawings, wherein like numerals refer to like parts in the several views, and in particular to Fig. 1, there is shown a schematic diagram of a duplicator embodying the magnetic information recording apparatus of the invention. The duplicator 10, generally designated by the numeral 10, includes a casing housing a first pair of reels 11 and 12 between which a slave (copy) tape 7 is spooled. The slave tape 7 is transported from the supply reel 11 to the take-up reel 12 around a transfer drum 13 through guide rollers 14A and 14B. Magnetic heads 8 and 9 are positioned in the path of transportation of the slave tape 7 between the transfer roller 13 and the take-up reel 12. The detecting head 8 detects a synchronizing signal recorded on the slave tape 7. The synchronizing signal may be a start cue signal, an end cue signal or a clock pulse signal produced at uniform intervals. The recording head 9 records a coded signal on the control track (CTL) of the slave tape 7 in synchronism with the detected synchronizing signal.

The casing also contains a second pair of reels 15 and 16 between which a mother tape TA is spooled. The mother tape TA is transported from the supply reel 15 to the take-up reel 16 through guide rollers 14C and 14D. The mother tape TA is guided in tape-on-tape contact with the slave tape 7 on the transfer drum 13. A magnetic head 17 is provided for magnetically biasing the slave tape 7 while in contact with the mother tape TA to copy magnetic information from the mother tape TA to the slave tape 7.

The synchronizing signal is fed from the detecting head 8 through an amplifier circuit 18 to a waveform shaper circuit 19 which produces a clock pulse signal CLK. The clock pulse signal CLK is applied to the clock terminal of a parallel-input, serial-output type shift register 20 to which coded information is transferred from a digital computer which includes a central processing unit (CPU) 21, a read only memory (ROM) 22, a random access memory (RAM) 23, a console or input device 24 such as a keyboard unit, and an interface unit 25. The CPU 21 communicates with the rest of the computer via a data bus 26. The CPU 21 transfers desired coded information 44 to the interface 25 which presets the coded information 44 in the shift register 20. The shift register 20 feeds the coded information 44 through an amplifier circuit 27 to the recording drum 9 in synchronism with the synchronizing signal CLK applied to its clock terminal.

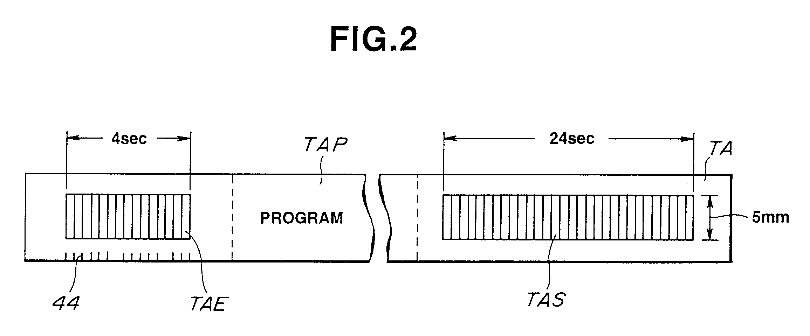

Referring to Fig. 2, the mother tape TA has a start cue signal TAS recorded on its starting section provided in front of the program section on which a program signal TAP is recorded and an end cue signal TAE on its ending section provided in rear of the program section. Assuming now that the speed of transportation of the mother tape TA is 33.35 mm/sec, the start cue signal TAS is recorded in a region having a width of 5 mm and a length corresponding to a time of 24 seconds and the end cue signal TAE is recorded in a region having a width of 5 mm and a length corresponding to a time of 4 seconds. These signals TAS, TAP and TAE are copied from the mother tape TA to the slave tape 7 in the duplicator 10. The copied start or end cue signal TAS or TAE is detected and used to record the coded information at a desired timing onto the slave tape 7.

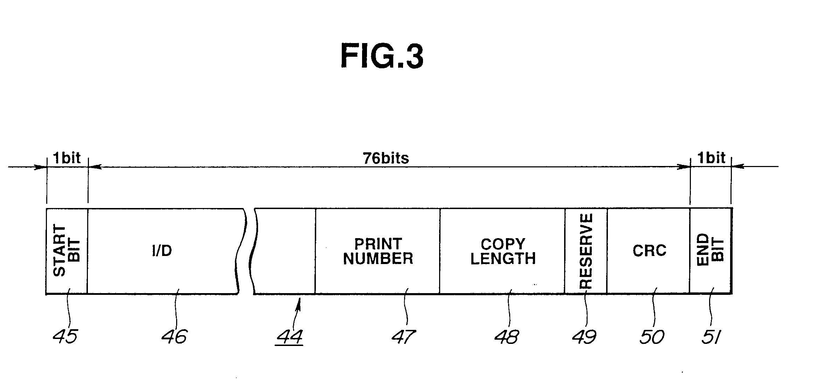

Referring to Fig. 3, there is shown one example of coded information 44 preset in the shift register 20. The coded information 44 is shown as comprising 78 (19 x 4 + 2) bits of information including a start bit 45 to which the first bit is assigned, an ID 46 for hexadecimal numerical expression in ten digits, a print number 47 which expresses a print number in three digits, a copy length 48 which expresses a copy length in three digits, a reserve 49 to which one digit is assigned, an error detection (CRC) 50 to which two digits are assigned, and an end bit 51 to which the last bit is assigned. Such coded information 44 is preset in the shift register 20 from the interface 25. The shift register 20 feeds the coded information 44 through the amplifier circuit 27 to the recording head 9 in synchronism with the synchronizing signal CLK applied its clock terminal. Therefore, the coded information 44 is recorded in the slave tape 7 in synchronism with the detected synchronizing signal (start or end cue signal). Assuming now that the coded information 44 is recorded three times on the slave tape 7, the slave tape 7 has 234 (78 x 3) bits of coded information. Furthermore, the error correction is performed with the CRC which is written three times.

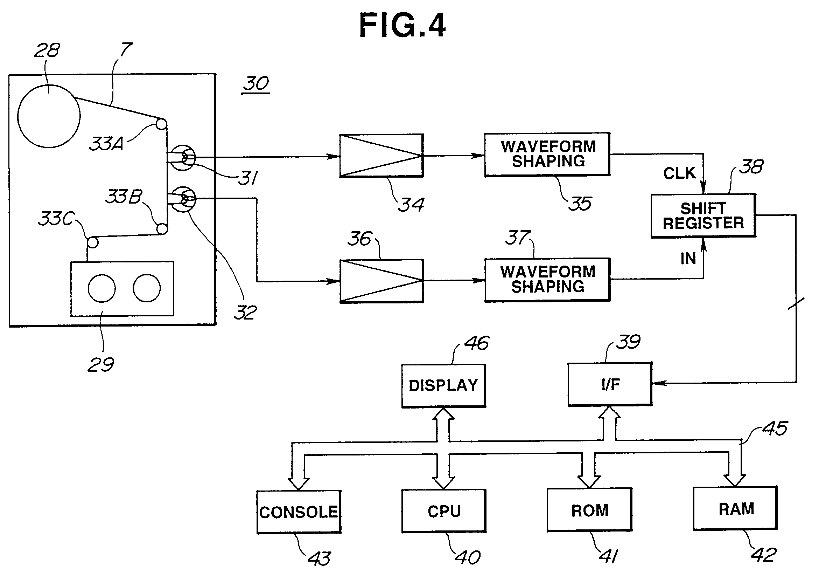

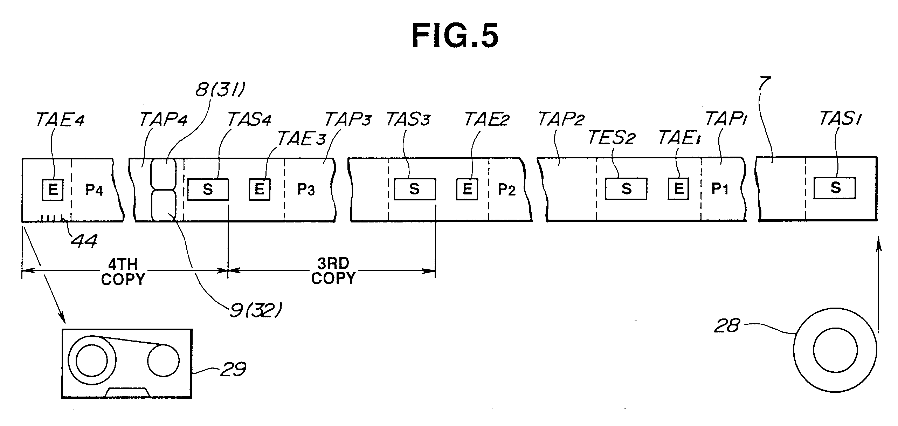

Referring to Fig. 4, there is shown a schematic diagram of a loading apparatus embodying the magnetic information reproducing apparatus of the invention. The loading apparatus, generally designated by the numeral 30, includes a casing which contains a reel 28 having a slave tape 7 wound therearound. The slave tape 7 has the same program softwares TAP1, TAP2, TAP3, TAP4, ... copied thereon repetitively from a mother tape TA, as shown in Fig. 5. The slave tape 7 is transported from the reel 28 through guide rollers 33A, 33B and 33C and loaded into a cassette 29 for each of the program softwares. Magnetic heads 31 and 32 are positioned in the path of transportation of the slave tape 7 between the guide rollers 33A and 33B. The detecting head 31 detects a synchronizing signal, for example, an end cue signal TAE4, recorded on the slave tape 7. The synchronizing signal may be a start cue signal or the like produced at uniform intervals. The reproducing head 32 reads the coded information 44 recorded on the control track (CTL) positioned below the region on which the end cue signal TAE4 is recorded on the slave tape 7.

The detected synchronizing signal is fed from the detecting head 31 through an amplifier circuit 34 to a waveform shaper circuit 35 which produces a clock pulse signal CLK. The clock pulse signal CLK is applied to the clock terminal of a parallel-input, serial-output type shift register 38. The read code information 44 is fed from the reproducing head 32 through an amplifier circuit 36 to a waveform shaper circuit 37. The shaped coded information 44 is fed to the data input terminal of the shift register 38. The shift register 38 operates in synchronism with the clock pulse signal CLK applied to its clock terminal to transfer the coded information 44 to the digital computer which includes an interface unit 39, a central processing unit (CPU) 40, a read only memory (ROM) 41, a random access memory (RAM) 42, a console or input device 43 such as a keyboard unit, and a display such as a CRT unit 46. The CPU 40 communicates with the rest of the computer via a data bus 45. The CPU 40 produces a command to represent the coded information 44 transferred from the shift register 38 to the interface unit 39 on the display 46.

When a predetermined length of slave tape 7 is loaded into the cassette 29, the detecting head 31 detects the start cue signal TAS4 recorded on the slave tape 7. The loading operation is terminated after automatic operation of cutting the slave tape 7 and sticking the tip end of the slave tape 7 to the leader tape wound around the take-up reel contained in the cassette 29. Similar loading operation is repeated for the program softwares TAP3, TAP2 and TAP1.

With the magnetic information recording apparatus of the invention, it is possible to provide accurate coded information recording without any undesired influence on the program to be printed.

Although the invention has been described in connection with a duplicator 10 operable in synchronism with the end cue signals TAE1 to TAE4 to record the coded information 44 on the control track (CTL), it is to be understood, of course, that the duplicator 10 may be arranged to operate in synchronism with the start cue signals TAS1 to TAS4. Although the invention has been described in connection with the coded information 44 recorded on the control track (CTL), it is to be understood that the coded information 44 may be recorded on a desired position in the direction of width of the tape rather than the control track. Although the duplicator 10 has been shown and described in connection with the detecting and recording heads 8 and 9 provided in the direction of transportation of the slave tape 7, it is to be understood that they may be provided on the same axis extending in the direction of width of the slave tape 7, as shown in Fig. 5.

With the magnetic information reproducing apparatus of the invention, it is possible to providing accurate coded information reading regardless of tape speed changes which may be caused by changes in the diameter of the tape wound around the reel during the loading operation.

Although the invention has been described in connection with a loading apparatus 30 operable in synchronism with the end cue signals TAE1 to TAE4 to reproduce the coded information 44, it is to be understood, of course, that the loading apparatus may be arranged to operate in synchronism with the start cue signals TAS1 to TAS4. Although the invention has been described in connection with the coded information recorded on the control track (CTL), it is to be understood that the coded information 44 may be reproduced on a desired position in the direction of width of the tape rather than the control track. Although the loading apparatus 30 has been shown and described in connection with the detecting and reproducing heads 31 and 32 provided in the direction of transportation of the slave tape 7, it is to be understood that they may be provided on the same axis extending in the direction of width of the slave tape 7, as shown in Fig. 5.

While the invention has been described in conjunction with specific embodiments thereof, it is evident that many alternatives, modifications and variations will be apparent to those skilled in the art. Accordingly, it is intended to embrace all alternatives, modifications and variations that fall within the scope of the appended claims.

## Claims

1. A magnetic information recording apparatus for dubbing magnetic information along with a periodical synchronizing signal produced at uniform intervals from a mother tape to a slave tape, the magnetic information recording apparatus comprising:
a detecting head provided in a path of transportation of the slave tape for detecting the periodical synchronizing signal; and
a recording head provided in the path of transportation of the slave tape; and
a control unit responsive to the periodical synchronizing signal fed thereto from the detecting head for operating the recording head to record a coded signal on the slave tape in synchronism with the periodical synchronizing signal.

2. The magnetic information recording apparatus as claimed in claim 1, wherein the periodical synchronizing signal is a start cue signal recorded on the slave tape.

3. The magnetic information recording apparatus as claimed in claim 1, wherein the periodical synchronizing signal is an end cue signal recorded on the slave tape.

4. The magnetic information recording apparatus as claimed in claim 1, wherein the detecting and recording heads are juxtaposed along the path of transportation of the slave tape.

5. The magnetic information recording apparatus as claimed in claim 1, wherein the detecting and recording heads are juxtaposed in the direction of width of the slave tape.

6. A magnetic information reproducing apparatus for loading a slave tape into a cassette, the slave tape having magnetic information dubbed along with a periodical synchronizing signal produced at uniform intervals from a mother tape, the magnetic information reproducing apparatus comprising:
a detecting head provided in a path of transportation of the slave tape for detecting the periodical synchronizing signal;
a reproducing head provided in the path of transportation of the slave tape; and
a control unit responsive to the periodical synchronizing signal fed thereto from the detecting head for operating the reproducing head to reproduce a code signal recorded on the slave tape in synchronism with the periodical synchronizing signal.

7. The magnetic information reproducing apparatus as claimed in claim 6, wherein the periodical synchronizing signal is a start cue signal recorded on the slave tape.

8. The magnetic information reproducing apparatus as claimed in claim 6, wherein the periodical synchronizing signal is an end cue signal recorded on the slave tape.

9. The magnetic information reproducing apparatus as claimed in claim 6, wherein the detecting and reproducing heads are juxtaposed along the path of transportation of the slave tape.

10. The magnetic information reproducing apparatus as claimed in claim 6, wherein the detecting and reproducing heads are juxtaposed in the direction of width of the slave tape.

11. A magnetic medium having a periodical synchronizing signal and a coded signal recorded thereon, the periodical synchronizing signal being produced at uniform intervals, the coded signal being recorded in synchronism with the periodical synchronizing signal.

12. The magnetic medium as claimed in claim 11, wherein the periodical synchronizing signal is a start cue signal recorded thereon.

13. The magnetic medium as claimed in claim 11, wherein the periodical synchronizing signal is an end cue signal recorded thereon.
